(19) Europäisches Patentamt
European Patent Office
Office européen des brevets

(11) **EP 3 627 259 A1**

(12) **EUROPEAN PATENT APPLICATION**
published in accordance with Art. 153(4) EPC

(43) Date of publication:
**25.03.2020 Bulletin 2020/13**

(51) Int Cl.:
***G05B 19/418*** (2006.01)

(21) Application number: **18827847.7**

(22) Date of filing: **28.06.2018**

(86) International application number:
**PCT/CN2018/093412**

(87) International publication number:
**WO 2019/007257 (10.01.2019 Gazette 2019/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2017 CN 201710542122**

(71) Applicant: **Ninebot (Beijing) Tech Co., Ltd.**
**Beijing 100192 (CN)**

(72) Inventors:
• **ZHONG, Yincheng**
**Beijing 100192 (CN)**
• **REN, Guanjiao**
**Beijing 100192 (CN)**

(74) Representative: **Regimbeau**
**20, rue de Chazelles**
**75847 Paris Cedex 17 (FR)**

(54) **POSITIONING METHOD AND SYSTEM, ELECTRONIC DEVICE, AND COMPUTER-READABLE STORAGE MEDIUM**

(57) A positioning method and system, an electronic device, and a computer-readable storage medium are provided. The positioning method comprises: a first device controls its operating state to be a first operating state (101); the first device in the first operating state is in signal communication with at least one second device in a second operating state to obtain a first communication parameter during a signal communication process (102); obtain a first position parameter of the at least one second device with respect to the first device on the basis of the first communication parameter (103); the first device sends to each second device the first position parameter of the at least one second device with respect to the first device (104). According to the positioning method and system, in a multi-device coordination task, the positioning of devices can be implemented by means of communication therebetween, so that the task is completed by means of ad hoc formation and coordination of multiple devices.

FIG. 1

**Description**

**CROSS-REFERENCE TO RELATED APPLICATION**

This application is filed based upon and claims priority to Chinese patent application No. 2017105421227, filed on July 05, 2017, the disclosure of which is hereby incorporated by reference in its entirety.

**TECHNICAL FIELD**

The present disclosure relates to a positioning technology, and more particularly, to a positioning method and system, an electronic device, and a computer-readable storage medium.

**BACKGROUND**

With the constant development of robot technologies, it become possible that multiple robots can cooperatively completed a complex task. In a multi-robot coordination task, position determination for the robots is crucial for organized movement of the robots and completion of distance related tasks. However, there is yet no mature multi-robot positioning solution at present, and most of exploratory solutions have to change a space where the robots are located, for example, a camera or another sensor is additionally arranged, or different positions are marked. Therefore such solutions cannot be applied in any environments due to too many limitations of the space where the robots are located.

**SUMMARY**

For solving the technical problem, embodiments of the present disclosure provide a positioning method and system, an electronic device, and a computer-readable storage medium.
An embodiment of the present disclosure provides a positioning method, which is applied to a first device and includes the following operations.
The first device controls its own working state to be a first working state.
The first device in the first working state performs signal communication with at least one second device in a second working state to obtain a first communication parameter in a signal communication process.
A first position parameter of the at least one second device relative to the first device is obtained based on the first communication parameter.
The first device sends the first position parameter of the at least one second device relative to the first device to each second device.
In an embodiment of the present disclosure, the method may further include the following operations.
The first device may control its own working state to be the second working state and notify the at least one second device to control a working state of the second device to be the first working state.
The first device in the second working state may perform signal communication with the at least one second device in the first working state to enable each second device to obtain a second position parameter of the first device relative to the second device according to a second communication parameter in the signal communication process.
The first device may receive the second position parameter of the first device relative to the second device from each second device.
The first device may determine orientation information of the at least one second device based on the first position parameter and the second position parameter.
The first device may send the orientation information of the at least one second device and orientation information of the first device to each second device.
In an embodiment of the present disclosure, the method may further include the following operations.
The first device may receive respective orientation information sent by each second device, wherein the orientation information of the second device may be detected by the second device through its own sensor.
The first device may send the orientation information of the at least one second device and orientation information of the first device to each second device.
In an embodiment of the present disclosure, the first device may include a positioning module, and the positioning module may include a first antenna, a second antenna, a first processing chip and a second processing chip.
When both the first antenna and the second antenna are connected with the second processing chip for cooperative work, the positioning module may realize the first working state.
When the first antenna is connected with the first processing chip for cooperative work, the positioning module may realize the second working state.
In an embodiment of the present disclosure, the operation that the first device in the first working state performs the signal communication with the at least one second device in the second working state to obtain the first communication parameter in the signal communication process may include the following operations.

The first device may receive a first data packet sent by the second device, sending time of the first data packet may be T1, and receiving time of the first data packet may be T2.

The first device may send a response packet to the second device, sending time of the response packet may be T3 and receiving time of the response packet may be T4.

The first device may receive a second data packet sent by the second device, sending time of the second data packet may be T5 which is calculated by the second device, and receiving time of the second data packet may be T6.

The first device may obtain the first communication parameter in the signal communication process based on T2, T3 and T6 locally recorded and T1, T2 and T4 contained in the second data packet, and the first communication parameter may include T1, T2, T3, T4, T5 and T6.

Correspondingly, the operation that the first position parameter of the at least one second device relative to the first device is obtained based on the first communication parameter may include the following operations.

Communication time between the first device and the second device may be calculated based on the first communication parameter.

A distance of the second device relative to the first device may be calculated based on the communication time between the first device and the second device.

In an embodiment of the present disclosure, the operation that the first device in the first working state performs the signal communication with the at least one second device in the second working state to obtain the first communication parameter in the signal communication process may further include the following operation.

The first device may acquire a phase difference or time difference of arrival of the second data packet at the first antenna and the second antenna through the second processing chip.

The first communication parameter may further include the phase difference or the time difference.

Correspondingly, the operation that the first position parameter of the at least one second device relative to the first device is obtained based on the first communication parameter may include the following operation.

A direction of the at least one second device relative to the first device may be calculated based on the phase difference or the time difference.

In an embodiment of the present disclosure, a positioning system is provided. The positioning system is applied to a first device and includes a control module, a communication module, a processing module and a sending module.

The control module is configured to control a working state of the first device to be a first working state.

The communication module is configured to perform signal communication with at least one second device in a second working state to obtain a first communication parameter in a signal communication process.

The processing module is configured to obtain a first position parameter of the at least one second device relative to the first device based on the first communication parameter.

The sending module is configured to send the first position parameter of the at least one second device relative to the first device to each se cond device.

In an embodiment of the present disclosure, the control module may further be configured to control the working state of the first device to be the second working state and notify the at least one second device to control a working state of the second device to be the first working state.

The communication module may further be configured to perform signal communication with the at least one second device in the first working state to enable each second device to obtain a second position parameter of the first device relative to the second device according to a second communication parameter in the signal communication process.

The system may further include a receiving module.

The receiving module may be configured to receive the second position parameter of the first device relative to the second device from each second device.

The processing module may further be configured to determine orientation information of the at least one second device based on the first position parameter and the second position parameter.

The sending module may further be configured to send the orientation information of the at least one second device and orientation information of the first device to each second device.

In an embodiment of the present disclosure, the system may further include a receiving module.

The receiving module may be configured to receive respective orientation information sent by each second device, and the orientation information of the second device may be detected by the second device through its own sensor.

The sending module may further be configured to send the orientation information of the at least one second device and orientation information of the first device to each second device.

In an embodiment of the present disclosure, the system may further include a positioning module, and the positioning module may include a first antenna, a second antenna, a first processing chip and a second processing chip.

When both the first antenna and the second antenna are connected with the second processing chip for cooperative work, the positioning module may realize the first working state.

When the first antenna is connected with the first processing chip for cooperative work, the positioning module may realize the second working state.

In an embodiment of the present disclosure, the communication module may be configured to:

receive a first data packet sent by the second device; sending time of the first data packet may be T1, and receiving time of the first data packet may be T2;

send a response packet to the second device, sending time of the response packet may be T3, and receiving time of the response packet may be T4;

receive a second data packet sent by the second device, sending time of the second data packet may be T5 which is calculated by the second device, and receiving time of the second data packet may be T6; and

obtain the first communication parameter in the signal communication process based on T2, T3 and T6 locally recorded and T1, T2 and T4 contained in the second data packet, and the first communication parameter may include T1, T2, T3, T4, T5 and T6.

The processing module may be configured to:

calculate communication time between the first device and the second device based on the first communication parameter; and

calculate a distance of the second device relative to the first device based on the communication time between the first device and the second device.

In an embodiment of the present disclosure, the communication module may be configured to:
acquire a phase difference or time difference of arrival of the second data packet at the first antenna and the second antenna through the second processing chip.

The first communication parameter may further include the phase difference or the time difference.

The processing module may be configured to calculate a direction of the at least one second device relative to the first device based on the phase difference or the time difference.

In an embodiment of the present disclosure, an electronic device is provided, which may include any abovementioned positioning system.

In an embodiment of the present disclosure, a computer-readable storage medium is provided, which may be configured to store a computer program, the computer program enabling a computer to execute the positioning method.

In the technical solutions of the embodiments of the present disclosure, the first device controls its own working state to be the first working state; the first device in the first working state performs signal communication with the at least one second device in the second working state to obtain the first communication parameter in the signal communication process; the first position parameter of the at least one second device relative to the first device is obtained based on the first communication parameter; and the first device sends the first position parameter of the at least one second device relative to the first device to each second device. With adoption of the technical solutions of the embodiments of the present disclosure, positioning between the devices may be completed through communication therebetween without changing an external environment, and multiple devices can be self-organized to move for formation and work cooperatively to complete a task.

BRIEF DESCRIPTION OF DRAWINGS

FIG. 1 is a first flowchart of a positioning method according to an embodiment of the present disclosure.
FIG. 2 is a second flowchart of a positioning method according to an embodiment of the present disclosure.
FIG. 3 is a schematic diagram of mutual positioning of two robots according to an embodiment of the present disclosure.
FIG. 4 is a schematic diagram of self-organized formation of multiple robots according to an embodiment of the present disclosure.
FIG. 5 is a structure composition diagram of a positioning system according to an embodiment of the present disclosure.

DETAILED DESCRIPTION

In order to make the characteristics and technical contents of the embodiments of the present disclosure understood in more detail, implementation of the embodiments of the present disclosure will be described below in combination with the drawings in detail. The appended drawings are only adopted for description as references and not intended to limit the embodiments of the present disclosure.

Key terms in embodiments of the present disclosure will be explained and described below.

Ultra WideBand (UWB): it is a carrierless communication technology. Data is transmitted through nanosecond to picosecond non-sinusoidal narrow pulses, and close-range accurate indoor positioning is usually implemented through subnanosecond ultra-narrow pulses.

Time Of Flight (TOF): TOF refers to a TOF ranging method. A sensor calculates a time difference of emission and reflection of a radio wave (or an optical wave, an acoustic wave and the like) and converts it into a target distance.

Phase Difference of Arrival (PDOA): it is a phase-difference-based positioning method. Phase differences of arrival of a signal at multiple monitoring stations are measured to determine relative angles of a signal source and base stations.

In a multi-robot positioning method, it is required to change an environment, arrange a camera or another sensor, and obtain a position of a robot by external means. Such a manner has a high requirement on the positioning environment and is unfavorable for large-scale application of a multi-robot coordination task. Therefore, embodiments of the present disclosure disclose a UWB-based positioning method, to solve problems about mutual positioning and self-organized formation of robots in an environment of the multi-robot coordination task.

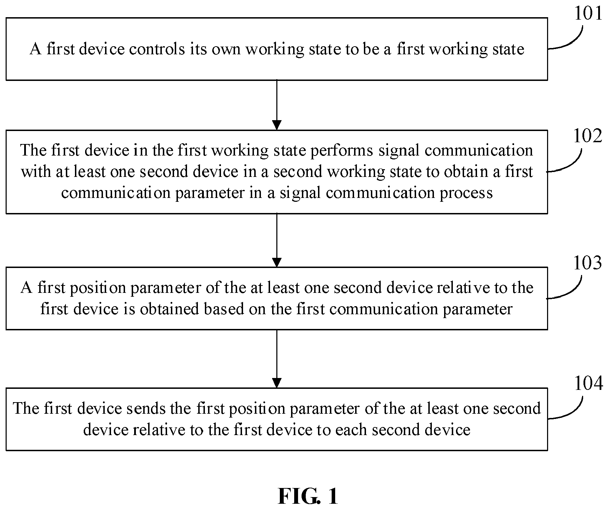

FIG. 1 is a first flowchart of a positioning method according to an embodiment of the present disclosure. The positioning method in the embodiment is applied to a first device. As illustrated in FIG. 1, the positioning method includes the following steps.

At S101, the first device controls its own working/operating state to be a first working state.

In the embodiment of the present disclosure, the first device and a second device can be mobile devices in any form, for example, robots and aircrafts. The number of the second device can be multiple, and the first device and multiple second devices form a device group. The embodiment of the present disclosure aims to implement mutual positioning of the devices in the device group.

In the embodiment of the present disclosure, the first device and the second device have two working states, respectively; i.e., the first working state and a second working state. When the first device is in the first working state, the second device is in the second working state; when the first device is in the second working state, the first device is in the first working state.

The first working state and second working state of the first device will be explained and described below as an example, and it is the same for the second device, specifically as follows.

The first device includes a positioning module, and the positioning module includes a first antenna, a second antenna, a first processing chip and a second processing chip.

When both the first antenna and the second antenna are connected with the second processing chip for cooperative work, the positioning module realizes/is in the first working state.

When the first antenna is connected with the first processing chip for cooperative work, the positioning module realizes the second working state.

In the above solution, each device (the first device and the second device) is a UWB positioning node, and the UWB positioning node can be an anchor node or a tag node. The anchor node can obtain a relative distance and an angle of the tag node through wireless communication. Multiple devices perform positioning as a tag node and an anchor node in turn in pairs to obtain relative positions of all the devices and then can be self-organized to move for formation. Based on this, the first working state refers to that the two antennae in the device work at the same time to realize a function of the anchor node. The second working state refers to that one antenna in the device works to realize a function of the tag node.

Based on the above, the first device controlling its own working state to be the first working state indicates that the first device serves as an anchor node.

At S102, the first device in the first working state performs signal communication with at least one second device in a second working state to obtain a first communication parameter in/during a signal communication process.

In the embodiment of the present disclosure, the second device is in the second working state, which indicates that the second device serves as a tag node.

The first device serving as the anchor node can perform signal communication with the multiple second devices serving as tag nodes to obtain the first communication parameter in the signal communication process. Herein, the first communication parameter is configured to calculate a first position parameter of the second device relative to/with respect to the first device. Herein, the first position parameter includes at least one of: a distance of the second device relative to the first device, or a direction (i.e., an angle) of the second device relative to the first device.

In the embodiment of the present disclosure, the first communication parameter about the distance of the second device relative to the first device is time, and the first communication parameter about the angle of the second device relative to the first device is a phase.

For the condition that the first communication parameter is the time, the first communication parameter is obtained through the following communication process.

The first device receives a first data packet sent by/from the second device, sending time of the first data packet is (marked as) T1, and receiving time of the first data packet is T2.

The first device sends a response packet to the second device, sending time of the response packet is T3, and receiving time of the response packet is T4.

The first device receives a second data packet sent by the second device, sending time of the second data packet is T5 which is calculated by the second device, and receiving time of the second data packet is T6.

The first device obtains the first communication parameter in the signal communication process based on T2, T3 and T6 locally recorded and T1, T2 and T4 contained in the second data packet, and the first communication parameter includes T1, T2, T3, T4, T5 and T6.

For the condition that the first communication parameter is the phase, the first communication parameter is obtained through the following communication process.

The first device acquires a phase difference or time difference of arrival of the second data packet at the first antenna and the second antenna through the second processing chip.

The first communication parameter further includes the phase difference or the time difference.

At S103, a first position parameter of the at least one second device relative to the first device is obtained based on the first communication parameter.

Specifically, communication time between the first device and the second device is calculated based on time T1, T2, T3, T4, T5 and T6.

The distance of the second device relative to the first device is calculated based on the communication time between the first device and the second device.

The direction of the at least one second device relative to the first device is calculated based on the phase difference or the time difference.

In the embodiment of the present disclosure, the distance and the direction form the first position parameter. The distance represents how long the second device is far away from the first device, and the direction represents the angle of the second device relative to the first device.

At S104, the first device sends the first position parameter of the at least one second device relative to the first device to each second device.

In the embodiment of the present disclosure, the first device can obtain first position parameters of all the second devices relative to the first device through communication with each second device. The first device packs and sends these position parameters to each second device, and then all the devices can know about mutual positions of the devices. According to the technical solution of the embodiment of the present disclosure, a UWB positioning system is integrated into the device, and then the devices can position one another to determine the mutual positions of the devices without any other external positioning information, so that an environment requirement on a coordination task of devices is reduced, and the coordination task of devices in different environments can be more easily.

In the above solution, the first device obtains a position relationship of the second device relative to the first device (i.e., the first position parameter). However, a position relationship of the second device relative to the first device (i.e., a second position parameter) cannot be simply determined based on the first position parameter. For example, a device A knows that a device B is 5m far behind (direction) it (the first position parameter), but a direction of the device A relative to the device B is uncertain/indeterminate and is required to be further determined according to a direction that the device B faces (i.e., orientation). If a position relationship of the device A relative to the device B is obtained, a position relationship of the device B relative to the device A is also obtained, and a relative orientation of the device A and the device B can be obtained based on the two position relationship data. For example, if the device A knows that the device B is 5m far behind it (the first position parameter), and the device B knows that the device A is 5m behind it (the second position parameter), devices A and B are back to back and a distance therebetween is 5m.

In the embodiment of the present disclosure, the position, rather than the orientation, can be considered for formation. Furthermore, for completing a task completed based on formation more accurately, the orientation is required to be considered. Therefore, the first device and the second device are required to exchange their roles as the anchor node and the tag node. Role exchange of the tag node and the anchor node is for determining orientations of the devices. For example, orientations of faces of robots are determined by two-way positioning. For example, if a position of the device A relative to the device B (including a distance and a direction) is determined in a communication process, a position of the device B relative to the device A is determined in another communication process, and then an orientation of the device B, i.e., an orientation of the device B relative to the device A, can be determined according to those position data (herein, the orientation is determined under the condition that an orientation of the device A is known as a reference).

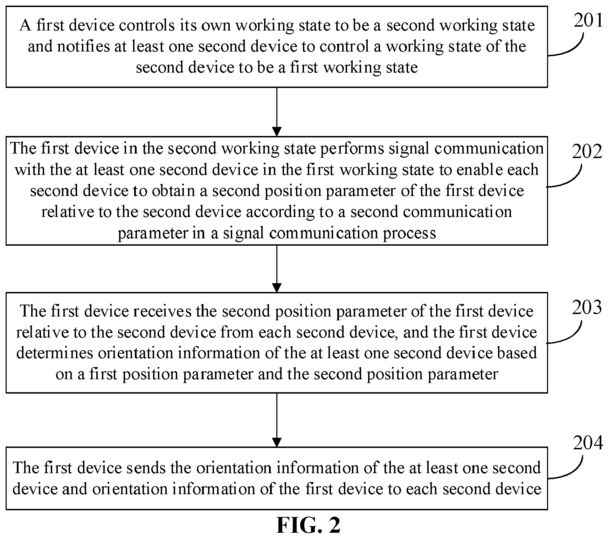

After the positioning process illustrated in FIG. 1, the roles of the first device and the second device are exchanged for a positioning process illustrated in FIG. 2.

FIG. 2 is a second flowchart of a positioning method according to an embodiment of the present disclosure.

The positioning method in the embodiment is applied to a first device. As illustrated in FIG. 2, the positioning method includes the following steps.

At S201, the first device controls its own working state to be a second working state and notifies at least one second device to control a working state of the second device to be a first working state.

Specifically, the first device controls its own working state to be the second working state, which indicates that the first device serves as a tag node. The second device is in the first working state, which indicates that the second device serves as an anchor node. Role exchange is completed in such a manner.

At S202, the first device in the second working state performs signal communication with the at least one second device in the first working state to enable each second device to obtain a second position parameter of the first device relative to the second device according to a second communication parameter in a signal communication process.

In the embodiment of the present disclosure, the second device serving as the anchor node can perform signal communication with the first device serving as the tag node to obtain the second communication parameter in the signal communication process. Herein, the second communication parameter is configured to calculate a second position parameter of the first device relative to the second device. Herein, the second position parameter includes at least one of: a distance of the first device relative to the second device, or a direction (i.e., an angle) of the first device relative to the second device.

At S203, the first device receives the second position parameter of the first device relative to the second device from each second device, and the first device determines orientation information of the at least one second device based on a first position parameter and the second position parameter.

In the embodiment of the present disclosure, if the first device knows its own absolute orientation information (i.e., a direction that a face faces), a relative orientation of the second device relative to the first device can be determined according to the first position parameter and the second position parameter, and the first device can determine an absolute orientation of the second device according to its own absolute orientation and the relative orientation of the second device relative to the first device.

At S204, the first device sends the orientation information of the at least one second device and orientation information of the first device to each second device.

In the embodiment of the present disclosure, after the first device sends the orientation information of the at least one second device and the orientation information of the first device to each second device, each device can obtain position conditions of all the devices and orientation conditions in the respective positions, so that accurate self-organized formation can be completed, and a target task can be completed.

The above orientation acquisition solution is implemented based on role exchange, and of course, is not limited thereto. A sensor capable of detecting the orientation, for example, a gyroscope, can also be mounted in the device, and the orientation information of the device is detected through the sensor. Based on this, the first device receives the respective orientation information sent by each second device, and the orientation information of the second device is detected by the second device through its own sensor. The first device sends the orientation information of the at least one second device and the orientation information of the first device to each second device. In such a manner, the position and the orientation can also be determined accurately.

Calculation of the position parameters (the first position parameter and the second position parameter) in the above embodiments of the present disclosure will be described below in detail.

1. The distance in/of the position parameter is calculated by means of a Two-Way Ranging (TWR) method. For each ranging, three communications is required.

a: The tag node sends a poll data packet, and records a sending timestamp tt1 when the packet is sent.

b: The anchor node waits for reception, records a timestamp ta1 of receiving time after receiving the poll data packet, sends a response packet, and records a timestamp ta2 of sending the response packet.

c: The tag node waits for reception, records a timestamp tt2 of receiving time after receiving the response packet, calculates a timestamp tt3 when a final packet is required to be sent, and sends the final packet when a clock arrival time of the tag node is tt3; the final packet includes three pieces of timestamp information (tt1, tt2 and tt3).

d: The anchor node records a receiving timestamp ta3 after receiving the final packet. In such case, the anchor node has recorded three timestamps ta1, ta2 and ta3, and simultaneously reads a content of the final packet to obtain the three timestamps tt1, tt2 and tt3 of the tag node.

e: Because the anchor time and the tag node are asynchronous in time, respective time differences are required to be calculated as follows.

$$Tround1=tt2-tt1.$$

$$Treply1=ta2-ta1.$$

$$Tround2=ta3-ta2.$$

$$Treply2=tt3-tt2.$$

f: Communication time can be accurately obtained according to information about the four time differences, and a distance therebetween can be acquired by a product of time and a light velocity. Herein,

$$\text{The communication time } T=(Tround1-Treply1)/2.$$

If the light velocity is V, the communication distance DIS=T×V.

2. The direction (i.e., the angle) is measured by means of a PDOA method. When the tag node sends the final packet, the anchor node can acquire a signal phase difference of arrival of the final packet at two antennae. A processor reads two phase values P1 and P2, calculates the phase difference PD=P1-P2 (the unit is a radian value) and can obtain an angle ang=(PD/(2Π))/360 (the unit is degree) of the tag node and the anchor node based on the phase difference PD.

Of course, the angle can also be measured by means of a Time Difference Of Arrival (TDOA) method. When the tag node sends the final packet, the anchor node can acquire a signal time difference of arrival of the final packet at the two antennae. The processor reads two time values T1 and T2, calculates a difference of distances from the signal to the two antennae, and then calculates the direction of the tag node relative to the anchor node according to a triangular relative relationship.

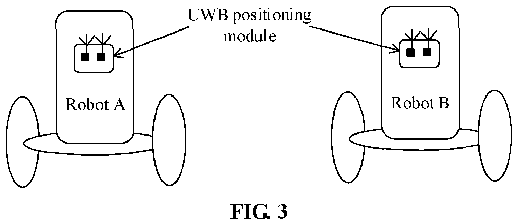

FIG. 3 is a schematic diagram of mutual positioning of two robots according to an embodiment of the present disclosure. As illustrated in FIG. 3, both a robot A and a robot B include UWB positioning modules. In a scenario that the two robots determine positions of each other, the UWB positioning module of the robot A can serve as a tag node, and the UWB positioning module of the robot B can serve as an anchor node. A positioning flow is as follows. The robot A sends a poll packet, and the robot B replies the robot A with a response packet after receiving the poll packet. The robot A can send a final packet to the robot B after receiving the response packet, and a relative angle of the robot A can be calculated according to a phase difference or time difference of reception of the final packet at the two antennae of the robot B. Then, a relative distance of the robot A is calculated according to total time for/of three communications. If the robot A is intended to determine a relative position of the robot B, the robot A serves as an anchor, the robot B serves as a tag, and the abovementioned process is repeated.

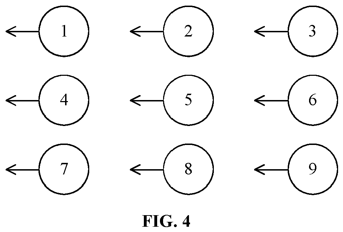

FIG. 4 is a schematic diagram of self-organized formation of multiple robots according to an embodiment of the present disclosure. As illustrated in FIG. 4, there are nine robots numbered as 1 to 9 respectively. Arrows in FIG. 4 represent orientations of the robots.

In a multi-robot formation scenario, one robot (assumed to be No. 5) can be defined as an organizer, a UWB positioning module of the No. 5 robot serves as an anchor node, and the other robots serve as tag nodes. The No. 5 robot sequentially communicates with the other robots to position the other robots by taking itself as an origin, and then broadcasts position information to the other robots. Then, the organizer serves as a tag node, and the other robots serve as anchor nodes to obtain angles of the organizer relative to them and further obtain their own orientation information. After position and orientation information of all the robots is determined, self-organized formation movement can be implemented according to an algorithm.

In the above solution, after the position and orientation information of all the robots is determined, each device determines its own flight parameter according to a target task (for example, formation according to a certain formation pattern) to implement autonomous formation. For example, if the formation pattern is an A shape, each of the devices determines its own flight parameter according to position conditions of the other devices to keep the A shape. It is to be noted that the organizer can be a certain robot or a fixed node arranged in an environment in advance.

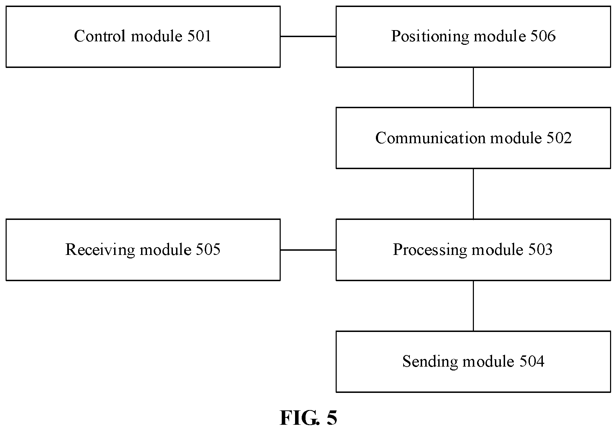

FIG. 5 is a structure composition diagram of a positioning system according to an embodiment of the present disclosure. The positioning system in the embodiment is arranged in a first device. As illustrated in FIG. 5, the positioning system includes a control module 501, a communication module 502, a processing module 503 and a sending module 504.

The control module 501 is configured to control a working state of the first device to be a first working state.

The communication module 502 is configured to perform signal communication with at least one second device in a second working state to obtain a first communication parameter in a signal communication process.

The processing module 503 is configured to obtain a first position parameter of the at least one second device relative to the first device based on the first communication parameter.

The sending module 504 is configured to send the first position parameter of the at least one second device relative to the first device to each second device.

In an embodiment of the present disclosure, the control module 501 is further configured to control the working state of the first device to be the second working state and notify the at least one second device to control a working state of the second device to be the first working state.

The communication module 502 is further configured to perform signal communication with the at least one second device in the first working state to enable each second device to obtain a second position parameter of the first device relative to the second device according to a second communication parameter in the signal communication process.

The system further includes a receiving module 505.

The receiving module 505 is configured to receive a second position parameter of the first device relative to the second device from each second device.

The processing module 503 is further configured to determine orientation information of the at least one second device based on the first position parameter and the second position parameter.

The sending module 504 is further configured to send the orientation information of the at least one second device and orientation information of the first device to each second device.

In an embodiment of the present disclosure, the system further includes the receiving module 505.

The receiving module 505 is configured to receive the respective orientation information sent by each second device. The orientation information of the second device is detected by the second device through its own sensor.

The sending module 504 is further configured to send the orientation information of the at least one second device and the orientation information of the first device to each second device.

In an embodiment of the present disclosure, the system further includes a positioning module 506, and the positioning module 506 includes a first antenna, a second antenna, a first processing chip and a second processing chip.

When both the first antenna and the second antenna are connected with the second processing chip for cooperative work, the positioning module 506 realizes/is in the first working state.

When the first antenna is connected with the first processing chip for cooperative work, the positioning module 506 realizes the second working state.

In an embodiment of the present disclosure, the communication module 502 is configured to:

receive a first data packet sent by the second device; sending time of the first data packet is T1, and receiving time of the first data packet is T2;

send a response packet to the second device; sending time of the response packet is T3, and receiving time of the response packet is T4;

receive a second data packet sent by the second device; sending time of the second data packet is T5 which is calculated by the second device, and receiving time of the second data packet is T6; and

obtain the first communication parameter in the signal communication process based on T2, T3 and T6 locally recorded and T1, T2 and T4 contained in the second data packet; the first communication parameter includes T1, T2, T3, T4, T5 and T6.

The processing module 503 is configured to:

calculate communication time between the first device and the second device based on the first communication parameter; and

calculate a distance of the second device relative to the first device based on the communication time between the first device and the second device.

In an embodiment of the present disclosure, the communication module 502 is configured to:

acquire a phase difference or time difference of arrival of the second data packet at the first antenna and the second antenna through the second processing chip.

The first communication parameter further includes the phase difference or the time difference.

The processing module 503 is configured to calculate a direction of the at least one second device relative to the first device based on the phase difference or the time difference.

Those skilled in the art should know that functions realized by each module in the positioning system illustrated in FIG. 5 can be understood with reference to related descriptions about the positioning method.

An embodiment of the present disclosure provides an electronic device, which includes any abovementioned positioning system.

The technical solutions recorded in the embodiments of the present disclosure can be freely combined without conflicts.

In some embodiments provided by the present disclosure, it is to be understood that the disclosed method and intelligent device can be implemented in another manner. The device embodiment described above is only schematic, and for example, division of the units is only logic function division, and other division manners can be adopted during practical implementation. For example, multiple units or components can be combined or integrated into another system, or some characteristics can be neglected or not executed. In addition, coupling or direct coupling or communication connection between each displayed or discussed component can be indirect coupling or communication connection, implemented through some interfaces, of the device or the units, and can be electrical and mechanical or adopt other forms.

The units described as separate parts can or cannot be physically separated, and parts displayed as units can or cannot be physical units, and namely can be located in the same place, or distributed to multiple network units. Part or all of the units can be selected according to a practical requirement to achieve the purposes of the solutions of the embodiments.

In addition, each functional unit in each embodiment of the present disclosure can be integrated into a second processing unit, each unit can also serve as an independent unit, or two or more than two units can also be integrated into a unit. The integrated unit can be implemented in a hardware form or in combinations of hardware and software functional unit.

An embodiment of the present disclosure also provides a computer-readable storage medium, which is configured to store a computer program.

Optionally, the computer-readable storage medium may be applied to a network device in the embodiments of the present disclosure, and the computer program enables a computer to execute corresponding flows implemented by the network device in each method of the embodiments of the present disclosure. For simplicity, elaborations are omitted herein.

Optionally, the computer-readable storage medium can be applied to a mobile terminal/terminal device in the embodiments of the present disclosure, and the computer program enables a computer to execute corresponding flows implemented by the mobile terminal/terminal device in each method of the embodiments of the present disclosure. For simplicity, elaborations are omitted herein.

The above is only the specific implementation mode of the application and not intended to limit the scope of protection of the application. Any variations or replacements apparent to those skilled in the art within the technical scope disclosed by the application shall fall within the scope of protection of the application.

**Claims**

1. A positioning method applied to a first device, comprising:

   controlling, by the first device, its own working state to be a first working state;
   performing, by the first device in the first working state, signal communication with at least one second device in a second working state to obtain a first communication parameter in a signal communication process;
   obtaining a first position parameter of the at least one second device relative to the first device based on the first communication parameter; and
   sending, by the first device, the first position parameter of the at least one second device relative to the first device to each second device.

2. The positioning method of claim 1, further comprising:

   controlling, by the first device, its own working state to be the second working state, and notifying the at least one second device to control a working state of the second device to be the first working state;
   performing, by the first device in the second working state, signal communication with the at least one second device in the first working state to enable each second device to obtain a second position parameter of the first device relative to the second device according to a second communication parameter in the signal communication process;

receiving, by the first device, the second position parameter of the first device relative to the second device from each second device;

determining, by the first device, orientation information of the at least one second device based on the first position parameter and the second position parameter; and

sending, by the first device, the orientation information of the at least one second device and orientation information of the first device to each second device.

3. The positioning method of claim 1, further comprising:

receiving, by the first device, respective orientation information sent by each second device, wherein the orientation information of the second device is detected by the second device through its own sensor; and

sending, by the first device, the orientation information of the at least one second device and orientation information of the first device to each second device.

4. The positioning method of claim 1, wherein the first device comprises a positioning module, and the positioning module comprises a first antenna, a second antenna, a first processing chip and a second processing chip;

when both the first antenna and the second antenna are connected with the second processing chip for cooperative work, the positioning module realizes the first working state; and

when the first antenna is connected with the first processing chip for cooperative work, the positioning module realizes the second working state.

5. The positioning method of claim 4, wherein the performing, by the first device in the first working state, the signal communication with the at least one second device in the second working state to obtain the first communication parameter in the signal communication process comprises:

receiving, by the first device, a first data packet sent by the second device; wherein sending time of the first data packet is T1, and receiving time of the first data packet is T2;

sending, by the first device, a response packet to the second device; wherein sending time of the response packet is T3, and receiving time of the response packet is T4,

receiving, by the first device, a second data packet sent by the second device; wherein sending time of the second data packet is T5 which is calculated by the second device, and receiving time of the second data packet is T6, and

obtaining, by the first device, the first communication parameter in the signal communication process based on T2, T3 and T6 locally recorded and T1, T2 and T4 contained in the second data packet; wherein the first communication parameter comprises T1, T2, T3, T4, T5 and T6; and

correspondingly, the obtaining the first position parameter of the at least one second device relative to the first device based on the first communication parameter comprises:

calculating communication time between the first device and the second device based on the first communication parameter, and

calculating a distance of the second device relative to the first device based on the communication time between the first device and the second device.

6. The positioning method of claim 5, wherein the performing, by the first device in the first working state, the signal communication with the at least one second device in the second working state to obtain the first communication parameter in the signal communication process further comprises:

acquiring, by the first device, a phase difference or time difference of arrival of the second data packet at the first antenna and the second antenna through the second processing chip;

wherein the first communication parameter further comprises the phase difference or the time difference; and

correspondingly, the obtaining the first position parameter of the at least one second device relative to the first device based on the first communication parameter comprises:

calculating a direction of the at least one second device relative to the first device based on the phase difference or the time difference.

7. A positioning system applied to a first device, comprising:

a control module, configured to control a working state of the first device to be a first working state;
a communication module, configured to perform signal communication with at least one second device in a second working state to obtain a first communication parameter in a signal communication process;
a processing module, configured to obtain a first position parameter of the at least one second device relative to the first device based on the first communication parameter; and
a sending module, configured to send the first position parameter of the at least one second device relative to the first device to each second device.

8. The positioning system of claim 7, wherein the control module is further configured to control the working state of the first device to be the second working state, and notify the at least one second device to control a working state of the second device to be the first working state;

the communication module is further configured to perform signal communication with the at least one second device in the first working state to enable each second device to obtain a second position parameter of the first device relative to the second device according to a second communication parameter in the signal communication process;
wherein the system further comprises:

a receiving module, configured to receive the second position parameter of the first device relative to the second device from each second device;
the processing module is further configured to determine orientation information of the at least one second device based on the first position parameter and the second position parameter; and
the sending module is further configured to send the orientation information of the at least one second device and orientation information of the first device to each second device.

9. The positioning system of claim 7, further comprising:

a receiving module, configured to receive respective orientation information sent by each second device, wherein the orientation information of the second device is detected by the second device through its own sensor, and the sending module is further configured to send the orientation information of the at least one second device and orientation information of the first device to each second device.

10. The positioning system of claim 7, further comprising a positioning module, wherein the positioning module comprises a first antenna, a second antenna, a first processing chip and a second processing chip;

when both the first antenna and the second antenna are connected with the second processing chip for cooperative work, the positioning module realizes the first working state; and
when the first antenna is connected with the first processing chip for cooperative work, the positioning module realizes the second working state.

11. The positioning system of claim 10, wherein the communication module is configured to:

receive a first data packet sent by the second device; wherein sending time of the first data packet is T1, and receiving time of the first data packet is T2,
send a response packet to the second device; wherein sending time of the response packet is T3; and receiving time of the response packet is T4,
receive a second data packet sent by the second device; wherein sending time of the second data packet is T5 which is calculated by the second device, and receiving time of the second data packet is T6, and
obtain the first communication parameter in the signal communication process based on T2, T3 and T6 locally recorded and T1, T2 and T4 contained in the second data packet, wherein the first communication parameter comprises T1, T2, T3, T4, T5 and T6; and
wherein the processing module is configured to:

calculate communication time between the first device and the second device based on the first communication parameter, and
calculate a distance of the second device relative to the first device based on the communication time between the first device and the second device.

**12.** The positioning system of claim 11, wherein the communication module is configured to:

acquire a phase difference or time difference of arrival of the second data packet at the first antenna and the second antenna through the second processing chip;
wherein the first communication parameter further comprises the phase difference or the time difference; and the processing module is configured to calculate a direction of the at least one second device relative to the first device based on the phase difference or the time difference.

**13.** An electronic device, comprising the positioning system of any one of claims 7-12.

**14.** A computer-readable storage medium, configured to store a computer program, and the computer program enabling a computer to execute the method of any one of claims 1-6.

A first device controls its own working state to be a first working state — 101

The first device in the first working state performs signal communication with at least one second device in a second working state to obtain a first communication parameter in a signal communication process — 102

A first position parameter of the at least one second device relative to the first device is obtained based on the first communication parameter — 103

The first device sends the first position parameter of the at least one second device relative to the first device to each second device — 104

**FIG. 1**

A first device controls its own working state to be a second working state and notifies at least one second device to control a working state of the second device to be a first working state — 201

The first device in the second working state performs signal communication with the at least one second device in the first working state to enable each second device to obtain a second position parameter of the first device relative to the second device according to a second communication parameter in a signal communication process — 202

The first device receives the second position parameter of the first device relative to the second device from each second device, and the first device determines orientation information of the at least one second device based on a first position parameter and the second position parameter — 203

The first device sends the orientation information of the at least one second device and orientation information of the first device to each second device — 204

**FIG. 2**

**FIG. 3**

**FIG. 4**

| Control module 501 | Positioning module 506 |
|---|---|

| | Communication module 502 |
|---|---|

| Receiving module 505 | Processing module 503 |
|---|---|

| | Sending module 504 |
|---|---|

**FIG. 5**

## INTERNATIONAL SEARCH REPORT

| International application No. |
| --- |
| **PCT/CN2018/093412** |

| A. | CLASSIFICATION OF SUBJECT MATTER |
| --- | --- |

G05B 19/418(2006.01)i

According to International Patent Classification (IPC) or to both national classification and IPC

| B. | FIELDS SEARCHED |
| --- | --- |

Minimum documentation searched (classification system followed by classification symbols)

G05B19/-; G01S5/; G01S1/-; G01S3/-; G05D1/-; G01C21/-; B25J

Documentation searched other than minimum documentation to the extent that such documents are included in the fields searched

Electronic data base consulted during the international search (name of data base and, where practicable, search terms used)

CNTXT; CNABS; DWPI: 多, 机器人, 群, 集, 定位, 位置, 超宽带, 厘米波, 协调, 协同, 共享, 分享, 飞行时间, 锚, 源, 标签, 节点, 信标, 角度, 朝向, 方向, 方位, robot, multi, position, locat+, UWB, ultra, wideband, cooperat+, shar+, TOF, time of flight, tag, anchor, node, angle, direction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 101661098 A (SHANGHAI JIAO TONG UNIVERSITY) 03 March 2010 (2010-03-03) description page 4, paragraph 3 to page 7, paragraph 5, and figures 1-2 | 1**3**7**9**13-14 |
| Y | CN 105425233 A (SHANGHAI KUWA ROBOT CO., LTD.) 23 March 2016 (2016-03-23) description, paragraphs [0076]-[0083], and figures 1-4 | 1**3**7**9**13-14 |
| PX | CN 107479513 A (NINEBOT BEIJING TECHNOLOGY CO., LTD.) 15 December 2017 (2017-12-15) description, paragraphs [0070]-[0173], and figures 1-5 | 1-14 |
| A | CN 104237850 A (SHENYANG UNIVERSITY OF TECHNOLOGY) 24 December 2014 (2014-12-24) entire document | 1-14 |
| A | WO 2017105621 A1 (GOOGLE INC.) 22 June 2017 (2017-06-22) entire document | 1-14 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 September 2018** | **10 October 2018** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/093412**

| Patent document cited in search report | | | Publication date (day/month/year) | Patent family member(s) | | | Publication date (day/month/year) |
|---|---|---|---|---|---|---|---|
| CN | 101661098 | A | 03 March 2010 | CN | 101661098 | B | 27 July 2011 |
| CN | 105425233 | A | 23 March 2016 | CN | 105425233 | B | 03 August 2018 |
| | | | | WO | 2017096695 | A1 | 15 June 2017 |
| CN | 107479513 | A | 15 December 2017 | | None | | |
| CN | 104237850 | A | 24 December 2014 | CN | 104237850 | B | 18 May 2018 |
| WO | 2017105621 | A1 | 22 June 2017 | CN | 108027419 | A | 11 May 2018 |
| | | | | US | 9791540 | B2 | 17 October 2017 |
| | | | | US | 2017168135 | A1 | 15 June 2017 |
| | | | | US | 2018038940 | A1 | 08 February 2018 |
| | | | | US | 10024952 | B2 | 17 July 2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2017105421227